# EUROPÄISCHE PATENTSCHRIFT

(11) **EP 1 207 004 B1**
(45) Veröffentlichungstag und Bekanntmachung des Hinweises auf die Patenterteilung: **17.03.2004**
(21) Anmeldenummer: 01126087.4
(22) Anmeldetag: 02.11.2001
(51) Int. Cl.: B23P 6/00, F01D 5/00

(54) **Verfahren zur Instandsetzung von Schaufeln**
Repairing method for airfoils
Procédé de réparation d' aubes

(30) Priorität: 10.11.2000 DE 10055505
(43) Veröffentlichungstag der Anmeldung: 22.05.2002
(73) Patentinhaber: MTU Aero Engines GmbH, 80995 München (DE)
(72) Erfinder: Meier, Reinhold, 84405 Dorfen (DE)
(74) Vertreter: Einsele, Rolf W.

(56) Entgegenhaltungen:
- EP-A- 1 013 787
- DE-C- 19 922 012
- US-A- 5 285 572
- BREMER C: "KOMPRESSOR-UND TURBINENSCHAUFELN AUTOMATISCH REPARIEREN" WERKSTATT UND BETRIEB, CARL HANSER VERLAG. MUNCHEN, DE, Bd. 129, Nr. 7/8, 1. August 1996 (1996-08-01), Seiten 672-674, XP000678763 ISSN: 0043-2792

## Beschreibung

Die Erfindung betrifft ein Verfahren zur Instandsetzung von Schaufeln für Turbomaschinenstufen in Axialbauweise mit einem Materialdefizit durch Verschleiß, Beschädigung und/oder Untermaß, insbesondere von Schaufel für Gasturbinen mit einer verschlissenen bzw. beschädigten Oberflächenschutzschicht, gemäß dem Oberbegriff des Patentanspruches 1, siehe, zum Beispiel US 5 285 572.

Turbomaschinenschaufeln stellen zum Teil komplexe Bauteile mit einer Reihe von Fertigungsschritten dar und bestehen meist aus hochwertigem Material, was sich in hohen Bauteilkosten bzw. einem hohen Bauteilwert ausdrückt. Als Beispiel seien hier innengekühlte Einkristall-Turbinenschaufeln aus Nickel-Basislegierung für Gasturbinenrotoren genannt. Bei Verschleiß bzw. kleineren Beschädigungen kann hier eine Instandsetzung deutlich wirtschaftlicher sein, als der Ersatz durch ein Neuteil. Häufig weisen solche Schaufeln spezielle Schutzschichten gegen mechanische Abrasion, gegen Heißgaskorrosion bzw. gegen extreme Temperaturen auf. Bei Verschleiß bzw. Beschädigung der Schutzschicht wird versucht, diese zu erneuern, wobei die vorhandenen Schutzschichtreste möglichst vollständig entfernt werden sollten. Dies ist deshalb schwierig, weil solche Schichten meist keramisch und daher mechanisch, thermisch und chemisch sehr widerstandsfähig sind. Außerdem diffundiert das Schichtmaterial in den Schaufelwerkstoff ein, so dass eine besonders tiefe, feste und kaum zu lösende Verbindung entsteht. In der Regel muss beim Abtragen der Schutzschichtreste auch Schaufelmaterial abgetragen werden.

Derzeit ist es beim Entschichten von Schaufeln üblich, chemische Behandlungsschritte mit mechanischen zu kombinieren, wobei durch Einwirkung einer Säure oder Lauge das Schichtgefüge aufgebrochen wird und anschließend z.B. durch mechanisches Strahlen ein weiteres Abtragen erfolgt. In der Regel ist es nötig, diesen Schrittwechsel mehrfach zu wiederholen. Diese Art des Entschichtens weist mehrere gravierende Nachteile auf. Sie ist umweltproblematisch hinsichtlich ihrer chemischen Seite, sie ist zeit-, material- und kostenintensiv, insbesondere durch den mehrfachen Wechsel zwischen verschiedenartigen Bearbeitungsvorgängen, und sie führt häufig zu einem über die Schaufeloberfläche betrachtet ungleichmäßigen, d.h. lokal unterschiedlichen Materialabtrag. Die Folgen können sein, dass das Schaufelprofil und damit die Aerodynamik nachteilig verändert werden, und dass durch unnötig hohen Abtrag von Schaufelwerkstoff die Bauteilfestigkeit reduziert wird. Durch das anschließende Neubeschichten können diese Defizite in der Regel nicht bzw. nur zum Teil ausgeglichen werden.

Es wird auch versucht, Schutzschichtreste und Oberflächenschäden an Schaufeln durch Fräsen abzutragen ggf. in Verbindung mit einem anschließenden Schleifen von Hand bzw. mit handgeführten Schleifgeräten. Auch hier besteht insbesondere beim Fräsen die Gefahr, zu viel Schaufelwerkstoff abzutragen sowie das Schaufelprofil zu verfälschen.

Demgegenüber besteht die Aufgabe der Erfindung darin, ein Verfahren zur Instandsetzung von Schaufeln für Turbomaschinenstufen in Axialbauweise mit einem Materialdefizit durch Verschleiß, Beschädigung und/oder Untermaß bereitzustellen, das ein zuverlässiges und bauteilschonendes Abtragen von Oberflächenfehlern und von schadhaften Schutzschichten auf zeitsparende und kostengünstige Weise ermöglicht sowie ein problemloses und optimales Auftragen bzw. Neubeschichten mit höchster Profilgenauigkeit gewährleistet.

Diese Aufgabe wird durch die in Anspruch 1 gekennzeichnete Kombination von Verfahrensschritten gelöst, in Verbindung mit den gattungsbildenden Merkmalen im Oberbegriff des Anspruches. Erfindungsgemäß werden die Istgeometrie der Schaufel gemessen, die Sollgeometrie datentechnisch bereitgestellt, die Sollprofile mit den Istprofilen bestmöglich zur Deckung gebracht, wodurch insgesamt eine angepasste Sollgeometrie errechnet wird, die angepasste Sollgeometrie rechnerisch um einen definierten Schichtabtrag auf eine im Schaufelwerkstoff liegende Nettogeometrie verkleinert, die Nettogeometrie zumindest in einem Teilbereich der Schaufel durch Abtragen gefertigt sowie fehlendes Material neu aufgetragen. Gebrauchte Schaufeln weisen häufig Abweichungen Ihrer Profile von der Sollage auf, d.h. der Profilschwerpunkt liegt beispielsweise nicht mehr auf der Stapelachse bzw. der Anstellwinkel des Profils ist etwas zu groß oder zu klein. Dies resultiert aus bleibenden Verformungen im häufig sehr heißen Arbeitsmedium (Gas, Dampf). Die Erfindung trägt diesem Sachverhalt Rechnung, indem sie die Profiltreue/das Sollprofil höher bewertet als die Solllage. Dies spiegelt sich in der Gestalt der angepassten Sollgeometrie wieder. Falls eine instandzusetzende Schaufel im ganzen Blatt keine Lageabweichung ihrer Profile aufweist, ist eine angepasste Sollgeometrie nicht erforderlich. Dann kann die Nettogeometrie unmittelbar aus der "absoluten" Sollgeometrie errechnet und gefertigt werden. Dies dürfte aber eher selten der Fall sein. Der von der angepassten Sollgeometrie - oder der "absoluten" Sollgeometrie - abgerechnete Schichtabtrag und der real gefertigte, neue Materialauftrag sollten hinsichtlich ihrer Dicke bzw. Dickenverteilung gleich sein, um auf Sollprofil zu kommen. Es wäre denkbar, geringfügig über die Sollprofildicke hinauszugehen, um eine gewisse "Verschleißreserve" zu haben.

Die Erfindung wird anschließend anhand der Figuren noch näher erläutert. Dabei zeigen in nicht maßstäblicher Darstellung:
Figur 1 eine perspektivische Ansicht einer durch Heißgaskorrosion beschädigten Schaufel mit im Schnitt dargestelltem Schaufelprofil,
Figur 2 eine mit Figur 1 vergleichbare Ansicht mit Schaufelprofil zur Verdeutlichung der innerhalb der Istgeometrie liegenden Nettogeometrie,
Figur 3 eine mit Figur 1 und 2 vergleichbare Ansicht mit Schaufelprofil zur Darstellung der gefertigten Nettogeometrie, und
Figur 4 einen Schaufelprofilschnitt mit Istprofil, Sollprofil in Sollage, Sollprofil in angepasster Lage und mit Nettoprofil.

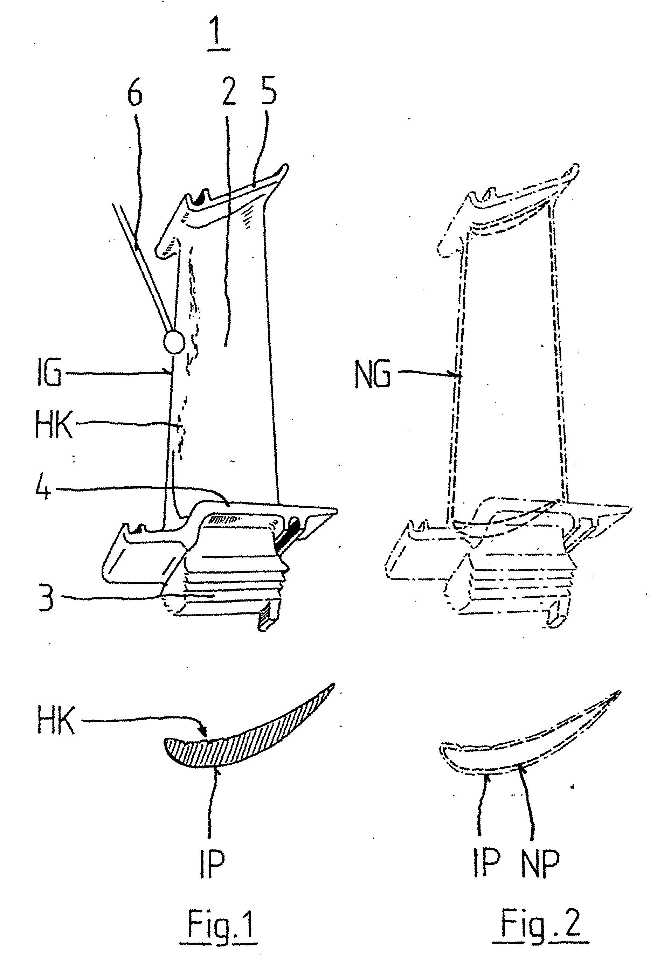

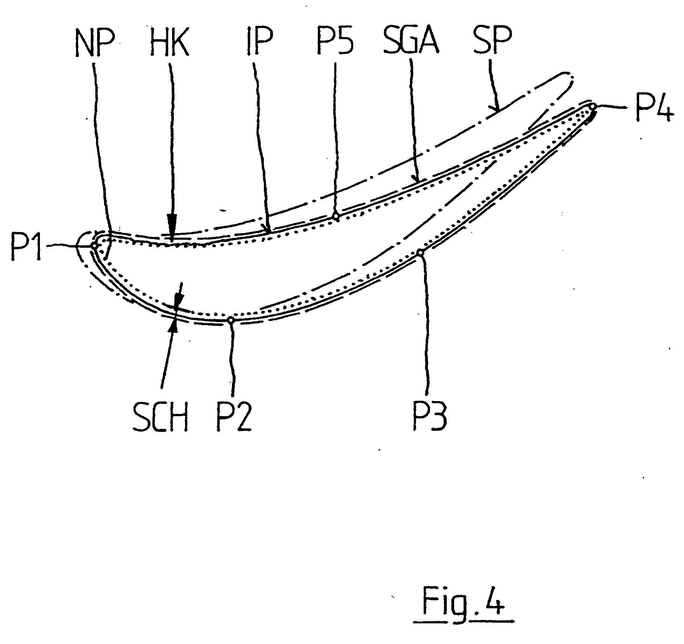

Die Schaufel 1 gemäß Figur 1 stellt eine Turbinen-Laufschaufel aus einem Gasturbinentriebwerk dar. Man erkennt das profilierte Schaufelblatt 2, eine die radial innere Strömungskanalwand bildende Plattform 4, ein die radial äußere Strömungskanalwand bildendes Deckband 5 sowie den tannenbaumartig profilierten Schaufelfuß 3. Des weiteren ist ein Messfühler 6 angedeutet, mit dessen Hilfe die Istgeometrie IG der Schaufel erfasst wird. Die Schaufel 1 weist auf der Druckseite im stromaufwärtigen Bereich Schäden durch Heißgaskorrosion HK auf. Siehe hierzu auch das unten in der Figur schraffiert wiedergegebene Istprofil IP. Zur Beseitigung der Schäden, d.h. zur Instandsetzung der Schaufel 1, soll im vorliegenden Fall über das gesamte Schaufelblatt 2 ein definierter Schichtabtrag erfolgen, wozu rechnerisch eine - zumindest weitestgehend - innerhalb der Istgeometrie IG liegende Nettogeometrie NG ermittelt wird. Näheres hierzu wird noch anhand von Figur 4 ausgeführt.

In Figur 2 ist die gesamte Istgeometrie IG der Schaufel 1 strichpunktiert wiedergegeben, die für den Blattbereich ermittelte Nettogeometrie NG ist mit größerer Strichstärke gestrichelt dargestellt. Auch im unteren Profilschnitt ist zu erkennen, dass das errechnete Nettoprofil NP innerhalb des realen Istprofils IP liegt, d.h. im Schaufelwerkstoff.

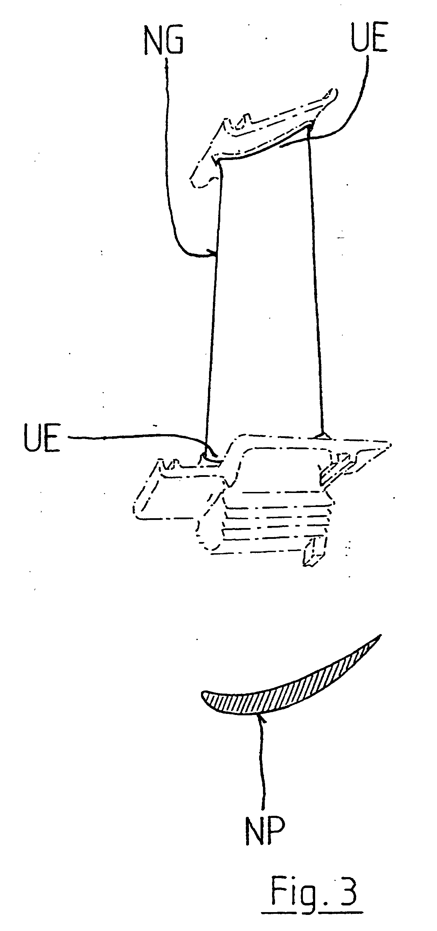

Figur 3 zeigt die reale, durch Abtragen gefertigte Nettogeometrie NG in dickeren, durchgezogenen Linien, die vom Abtragen nicht erfassten Bereiche der Schaufel 1 sind dünner sowie strichpunktiert ausgeführt. Die Übergänge UE von der Nettogeometrie NG zu den angrenzenden Schaufelbereichen sind in definierter Weise gerundet zu fertigen, um Kerbeffekte zu vermeiden. Der untere Profilschnitt in der Figur zeigt nur noch das reale, schraffierte Nettoprofil NP.

Das Abtragen kann spanabhebend, durch Fräsen und/oder Schleifen, oder spanlos, vorzugsweise durch sogenanntes Laser-Caving erfolgen. Das gewählte Verfahren wird auch davon abhängen, ob es sich um eine Schaufel mit oder ohne Schutzbeschichtung handelt. Das Erfindungsprinzip bleibt hiervon unberührt. Das anschließend erforderliche Auftragen von Schaufelmaterial bzw. einer neuen Schutzschicht auf die reale Nettogeometrie NG ist für den Fachmann klar und daher nicht gesondert dargestellt. Die hierfür in Frage kommenden Verfahren, wie Flammspritzen, Laser-Pulver-Auftragschweißen, Galvanisieren, Löten etc. sind bekannt.

Anhand von Figur 4 wird die erfindungsgemäße Vorgehensweise weiter verdeutlicht. Die Darstellung entspricht einem Axialschnitt quer zur radialen Längsrichtung des Schaufelblattes 2, wodurch das örtliche, strömungstechnisch wirksame Schaufelprofil konturgetreu wiedergegeben wird. Die durchgezogene Linie entspricht dem realen Istprofil IP der gebrauchten, instandzusetzenden Schaufel 1. Auch hier ist druckseitig im stromaufwärtigen Bereich ein Schaden durch Heißgaskorrosion HK mit unregelmäßigem Materialdefizit angedeutet. Das Istprofil IP wird an ausgewählten Stellen, d.h. punktweise, vermessen und datentechnisch gespeichert, was hier mit den Punkten P1 bis P5 symbolisiert ist. Die Messpunkte werden gezielt an Stellen gewählt, wo erfahrensgemäß keine relevanten Oberflächenschäden auftreten. Falls nämlich mehrere Messpunkte in Korrosionsvertiefungen liegen würden, könnte ein falsches Bild von Form und Lage des Istprofils IP entstehen. Trotzdem wird es sinnvoll sein, gezielt die maximale Tiefe der vorhandenen Schadensstellen senkrecht zur Blattoberfläche messtechnisch zu erfassen, um den späteren Schichtabtrag bedarfsweise anzupassen. Das örtliche Sollprofil SP in Sollage ist strichpunktiert eingezeichnet mit einer zur Verdeutlichung übertrieben groß gewählten Lageabweichung zum Istprofil IP. Das Sollprofil SP in Solllage befindet sich hier praktisch mit seiner gesamten, konkaven Druckseite außerhalb des Istprofils IP. Gleiches gilt für seine Eintrittskante stromaufwärts von P1 sowie für seine Austrittskante nahe P4. Es wird deutlich, dass es wenig sinnvoll wäre, das Istprofil IP zum Sollprofil SP in Solllage umzugestalten. Hierfür müsste unverhältnismäßig viel Schaufelwerkstoff saugseitig abgetragen und druckseitig neu aufgebracht werden. Die erfindungsgemäße Vorgehensweise ist daher eine andere. Das Sollprofil SP wird aus seiner Sollage rechnerisch so weit verschoben und/oder gedreht, bis seine Lage bestmöglich mit der von den Istprofilpunkten P1 bis P5 vorgegebenen Lage übereinstimmt. Diese angepasste Lage des Sollprofils ist gestrichelt dargestellt, wobei das Kürzel SGA für angepasste Sollgeometrie steht. Im Betrieb bei hohen Temperaturen und hohen mechanischen Lasten kommt es häufig zu bleibenden Verformungen der Schaufeln, u.a. durch Verbiegen und Verdrehen. Bei Laufschaufeln nehmen die Verformungen normalerweise mit zunehmendem, radialem Abstand vom Schaufelfuß ebenfalls zu. So kann es ein, dass die Istlage des Schaufelprofils nahe der inneren Plattform noch mit der Solllage übereinstimmt, während sie nahe der Schaufelspitze bzw. im mittleren Schaufelblattbereich deutlich von der Solllage abweicht. Im Sinne der Erfindung wird das Sollprofil SP selbstverständlich nur dann aus seiner Solllage herausbewegt, d.h. angepasst, wenn eine relevante Lageabweichung des Istprofils IP vorliegt. In der Figur erkennt man auch, dass hier das Sollprofil SP etwas dicker als das Istprofil IP ist, was durch Abnutzung des realen Istprofils IP entstehen kann. Es können aber auch schon bei der Fertigung entsprechende Abweichungen entstanden sein. Die Erfindung bietet die Möglichkeit, solche Abweichungen vom Sollprofil SP im Rahmen einer Instandsetzung auszugleichen.

Ausgehend von der angepassten, gestrichelten Lage SGA wird das Sollprofil - ebenfalls rechnerisch - allseitig um einen definierten Schichtabtrag SCH verkleinert. Letzterer kann in seiner Dicke konstant oder über die Blattoberfläche variierend eingegeben werden und berücksichtigt auch die senkrecht zur Blattoberfläche tiefsten Beschädigungen des Schaufelblattes 2. Der Schichtabtrag SCH sollte so groß gewählt werden, dass das mit ihm errechnete Nettoprofil NP möglichst vollständig innerhalb des Istprofils IP, d.h. im Schaufelwerkstoff liegt. Auf diese Weise lassen sich Beschädigungen mit Materialdefizit bereits beim Abtragen vollständig beseitigen unter Erzeugung einer optimalen Strömungskontur. Dieses, zunächst rechnerische Nettoprofil NP ist in der Figur gepunktet dargestellt. Wie mehrfach erwähnt, wird das Schaufelblatt zumindest in Teilbereichen bis auf dieses Nettoprofil NP abgetragen und anschließend durch neuen Materialauftrag wieder bis zum Sollprofil aufgedickt, wobei Schaufelwerkstoff und/oder eine neue Schutzschicht aufgebracht wird. Es sei noch erwähnt, dass mit der Erfindung auch ein Schaufelprofil modifiziert werden kann. Dabei wird das ursprüngliche Sollprofil der vorhandenen Schaufel durch ein - in engen Grenzen - modifiziertes, neues Sollprofil ersetzt und erfindungsgemäß Material ab- und wieder aufgetragen.

## Patentansprüche

1. Verfahren zur Instandsetzung von Schaufeln für Turbomaschinenstufen in Axialbauweise mit einem Materialdefizit durch Verschleiß, Beschädigung und/oder Untermaß, insbesondere von Schaufeln für Gasturbinen mit einer verschlissenen bzw. beschädigten Oberflächenschutzschicht, bei welchem zumindest in einem Teilbereich der Schaufel die Schutzschicht und/oder Schaufelwerkstoff abgetragen und durch neuen Schaufelwerkstoff und/oder eine neue Schutzschicht ersetzt wird, **gekennzeichnet durch** die Kombination folgender Verfahrensschritte:
a) Die Istgeometrie (IG) der Schaufel (1) wird an definierten Punkten (P1öP5) messtechnisch erfasst (6) und datentechnisch gespeichert,
b) die Sollgeometrie (SG) der Schaufel (1), großteils definiert **durch** ihre axialen Sollprofile (SP), d.h. Sollquerschnitte, in Solllage, wird in datentechnisch gespeicherter Form bereitgestellt,
c) die Sollgeometrie (SG) wird - vorwiegend in axialen Schnittebenen - mit der punktuell bekannten Istgeometrie (IG) verglichen, im Falle merklicher Abweichungen wird das örtliche Sollprofil (SP) **durch** Drehung und/oder Verschiebung in seiner Ebene bestmöglich mit dem punktuell bekannten, örtlichen Istprofil (IP) zur Deckung gebracht, wobei aus diesen, von der Solllage abweichenden Sollprofilen und aus den ggf. in Solllage belassenen Sollprofilen über die radiale Schaufelhöhe eine in sich knick- und stufenfreie, angepasste Sollgeometrie (SGA) errechnet und gespeichert wird,
d) die angepasste Sollgeometrie (SGA) wird rechnerisch um einen definierten Schichtabtrag (SCH) verkleinert bis auf eine weitestgehend bis vollständig im Schaufelwerkstoff liegende Nettogeometrie (NG),
e) die errechnete Nettogeometrie (NG) für zumindest einen Teilbereich der Schaufel (1) wird **durch** Abtragen gefertigt unter Erzeugung definierter, gerundeter Übergänge (UE) hin zu nicht abzutragenden Schaufelbereichen, und
f) auf die gefertigte Nettogeometrie (NG) wird neuer Schaufelwerkstoff und/oder eine neue Schutzschicht in einer mit der Dicke des von der angepassten Sollgeometrie (SG) abgerechneten Schichtabtrages (SCH) zumindest weitgehend gleichen Dicke aufgetragen.

2. Verfahren nach Anspruch 1, **dadurch gekennzeichnet, dass** das Abtragen spanend, mittels Fräsen und/oder Schleifen oder spanlos mittels Laser, durch sogenanntes Laser-Caving, erfolgt.

3. Verfahren nach Anspruch 1 oder 2, **dadurch gekennzeichnet, dass** das messtechnische Erfassen (6) der Istgeometrie (IG) der Schaufel (1) und das Abtragen auf Nettogeometrie (NG) auf ein und der selben CNC-Bearbeitungsmaschine erfolgen.

4. Verfahren nach einem oder mehreren der Ansprüche 1 bis 3, **dadurch gekennzeichnet, dass** der rechnerische, von der angepassten Sollgeometrie (SGA) zur Nettogeometrie (NG) führende Schichtabtrag (SCH) mit über die Schaufeloberfläche konstanter oder sich definiert ändernder Dicke eingegeben wird.

5. Verfahren nach Anspruch 4, **dadurch gekennzeichnet, dass** der reale Schichtauftrag in Form von Schaufelwerkstoff und/oder einer neuen Schutzschicht auf die gefertigte Nettogeometrie (NG) in Analogie zum rechnerischen Schichtabtrag (SCH) mit konstanter oder sich definiert ändernder Dicke erfolgt.

6. Verfahren nach einem oder mehreren der Ansprüche 1 bis 5, **dadurch gekennzeichnet, dass** das Auftragen von Schaufelwerkstoff und/oder einer neuen Schutzschicht mittels Galvanik, Löten, Schweißen, Schlickertechnik und/oder Spritzen erfolgt, insbesondere durch Laser-Pulver-Auftragschweißen bzw. Flammspritzen.

7. Verfahren nach einem oder mehreren der Ansprüche 1 bis 6, **dadurch gekennzeichnet, dass** der Schaufelwerkstoff ein Titan-, Nickel- oder Kobalt-Basiswerkstoff ist.

8. Verfahren nach einem oder mehreren der Ansprüche 1 bis 7, **dadurch gekennzeichnet, dass** die Schutzschicht eine Panzerung, eine Heißgaskorrosionsschutzschicht und/oder eine Wärmedämmschicht ist.

9. Verfahren nach einem oder mehreren der Ansprüche 1 bis 8, **dadurch gekennzeichnet, dass** die Punkte (P1öP5) für die messtechnische Erfassung der Schaufel-Istgeometrie (IG) gezielt dort auf der Schaufeloberfläche positioniert werden, wo erfahrungsgemäß kein relevanter Verschleiß bzw. keine relevanten Schäden auftreten.

10. Verfahren nach einem oder mehreren der Ansprüche 1 bis **9, dadurch gekennzeichnet, dass** für die Berechnung der angepassten Sollgeometrie (SGA) in -radialer-Schaufellängsrichtung im Bereich des Schaufelblattes (2), d.h. für die Berechnung der Schaufelblatt-Mantellinien, ein minimaler Krümmungsradius vorgegeben wird.

## Claims

1. Method for the repair of blades for turbo-machine stages in axial construction with a material deficit caused by wear, damage and/or undersize, in particular of blades for gas turbines with a worn or damaged protective surface layer, whereby the protective layer and/or the blade material is removed and replaced by new blade material and/or a new protective layer in at least a part-section of the blade, **characterised by** the combination of the following steps:
a) The actual geometry (IG) of the blade (1) is detected using measuring technology (6) at defined points (P1öP5) and stored using data systems technology;
b) the design geometry (SG) of the blade (1), largely defined by its axial design profiles (SP), i.e. design cross-sections, in design position, is made available in a form stored using data systems technology;
c) the design geometry (SG) is - predominantly in axial planes of section - compared to the selectively known actual geometry (IG) and, in case of noticeable differences, the local design profile (SP) is brought into register as closely as possible with the selectively known local actual profile (IP) by rotating it and/or displacing it in its plane, whereby an adapted design geometry (SGA) intrinsically free of kinks and steps is calculated over the radial height of the blade from these design profiles deviating from design position and from any design profiles remaining in design position, and stored;
d) the adapted design geometry (SGA) is reduced by calculation by a defined layer removal (SCH) to a net geometry (NG) lying largely if not completely within the blade material;
e) the calculated net geometry (NG) for at least a part-section of the blade (1) is produced by removal, producing defined, radiussed transitions to parts of the blade not to be removed; and
f) new blade material and/or a new protective layer of a thickness at least largely equal to the thickness of the layer removal (SCH) calculated from the adapted design geometry (SG) is applied to the produced net geometry (NG).

2. Method according to claim 1, **characterised in that** the removal is achieved by cutting by means of milling and/or grinding, or without cutting by means of a laser, by so-called laser caving.

3. Method according to claim 1 or 2, **characterised in that** one and the same CNC machine is used for the detection of the actual geometry (IG) of the blade (1) using measuring technology and for its reduction by removal to net geometry (NG).

4. Method according to one or more of claims 1 to 3, **characterised in that** the calculated layer removal (SCH) leading from the adapted design geometry (SGA) to the net geometry (NG) is input with a thickness which is either constant over the blade surface or changes in a defined way.

5. Method according to claim 4, **characterised in that** blade material and/or a new protective layer is applied to the produced net geometry (NG) in analogy to the calculated layer removal (SCH) with a thickness which is either constant or changes in a defined way.

6. Method according to one or more of claims 1 to 5, **characterised in that** blade material and/or a new protective layer is applied by means of electroplating, soldering, welding, slip-casting or spraying, in particular by laser powder resurfacing or flame spraying.

7. Method according to one or more of claims 1 to 6, **characterised in that** the blade material is a titanium, nickel or cobalt base material.

8. Method according to one or more of claims 1 to 7, **characterised in that** the protective layer is an armour-plating, a hot-gas corrosion proofing layer and/or a heat insulating layer.

9. Method according to one or more of claims 1 to 8, **characterised in that** the points (P1öP5) for the detection of the actual blade geometry (IG) using measuring technology are intentionally placed in areas of the blade geometry where experience indicates that no relevant wear or damage occurs,

10. Method according to one or more of claims 1 to 9, **characterised in that** a minimum radius of curvature is specified for the calculation of the adapted design geometry (SGA) in the radial longitudinal direction of the blade in the region of the blade plane (2), i.e. for the calculation of the generating lines of the blade plane.

## Revendications

1. Procédé de réparation d'aubes pour des étages de turbines de conception axiale ayant un déficit de matériau dû à l'usure, à des dommages et/ou à des dimensions insuffisantes, en particulier d'aubes pour des turbines à gaz avec une couche de protection de surface usée ou endommagée, avec lequel, au moins dans une zone partielle de l'aube, la couche de protection et/ou le matériau constitutif de l'aube est enlevé et est remplacé par un nouveau matériau et/ou par une nouvelle couche de protection, **caractérisé par** la combinaison des étapes de procédé suivantes :
a) la géométrie réelle (IG) de l'aube (1) est déterminée par une mesure (6) réalisée à des points définis (P1+P5) et les données correspondantes sont mémorisées,
b) la géométrie de consigne (SG) de l'aube (1), qui est définie en grande partie par ses profils de consigne axiaux (SP), c'est-à-dire les sections de consigne en position de consigne, est mise à disposition sous forme de données mémorisées,
c) la géométrie de consigne (SG) est - de manière prépondérante dans des plans de coupe axiaux - comparée avec la géométrie réelle (IG) connue ponctuellement. En cas de divergences sensibles, le profil de consigne local (SP) est, par une rotation et/ou par un déplacement dans son plan, mis le mieux possible en recouvrement avec le profil réel local (IP) ponctuellement connu, alors qu'à partir de ces profils de consigne divergents de la position de consigne et à partir des profils de consigne éventuellement laissés dans la position de consigne, une géométrie de consigne adaptée (SGA) libre de coudes et de paliers est calculée sur la hauteur radiale des aubes et est mémorisée,
d) la géométrie de consigne adaptée (SGA) est réduite par le calcul de la valeur d'un enlèvement de couche défini (SCH), et ceci jusqu'à obtenir une géométrie nette (NG) se situant largement à complètement dans le matériau constitutif de l'aube,
e) la géométrie nette calculée (NG) pour au moins une zone partielle de l'aube (1) est réalisée par une opération d'enlèvement en réalisant des zones de passage définies et arrondies (UE) vers des zones d'aubes ne devant pas être soumises à un enlèvement et
f) sur la géométrie nette (NG) qui a été réalisée est appliqué un nouveau matériau pour l'aube et/ou une nouvelle couche de protection avec une épaisseur ayant au moins largement la même valeur que l'épaisseur de l'enlèvement de couche (SCH) calculée par rapport à la géométrie de consigne adaptée (SG).

2. Procédé selon la revendication 1, **caractérisé en ce que** l'enlèvement a lieu par enlèvement de copeaux par fraisage et/ou par rectification ou sans enlèvement de copeaux à l'aide d'un laser, selon un procédé appelé « Laser-Caving » (creusement par laser).

3. Procédé selon la revendication 1 ou 2, **caractérisé en ce que** la saisie par la mesure (6) de la géométrie réelle (IG) de l'aube (1) et l'enlèvement jusqu'à la géométrie nette (NG) ont lieu sur la même machine d'usinage à commande numérique.

4. Procédé selon l'une quelconque ou plusieurs des revendications 1 à 3, **caractérisé en ce que** l'enlèvement de couche (SCH) calculé et conduisant de la géométrie de consigne adaptée (SGA) à la géométrie nette (NG) fait l'objet d'une insertion de données sur la base d'une épaisseur qui est constante ou qui change de manière définie sur la surface de l'aube.

5. Procédé selon la revendication 4, **caractérisé en ce que** l'application réelle de couches sur la géométrie nette (NG) qui a été réalisée a lieu en analogie avec l'enlèvement de couche calculé (SCH), et ceci avec une épaisseur constante ou changeant de manière définie et sous forme de matériau pour l'aube et/ou d'une nouvelle couche de protection.

6. Procédé selon l'une quelconque ou plusieurs des revendications 1 à 5, **caractérisé en ce que** l'application de matériau pour l'aube et/ou d'une nouvelle couche de protection a lieu par galvanisation, par brasure, par soudure, par une technique à barbotine et/ou par pulvérisation, en particulier par soudure de rechargement de poudre au laser ou par projection à la flamme.

7. Procédé selon l'une quelconque ou plusieurs des revendications 1 à 6, **caractérisé en ce que** le. matériau pour l'aube est un matériau à base de titane; de nickel ou de cobalt.

8. Procédé selon l'une quelconque ou plusieurs des revendications 1 à 7, **caractérisé en ce que** la couche de protection est un blindage, une couche de protection anti-corrosion à gaz chaud et/ou une couche d'isolation thermique.

9. Procédé selon l'une quelconque ou plusieurs des revendications 1 à 8, **caractérisé en ce que** les points (P1+P5) pour la saisie par la mesure de la géométrie réelle (IG) des aubes sont positionnés de manière ciblée aux endroits de la surface des aubes où par expérience ne se produisent pas d'usure importante ou des dommages importants.

10. Procédé selon l'une quelconque ou plusieurs des revendications 1 à 9, **caractérisé en ce qu'**un rayon de courbure minimum est imposé pour le calcul de la géométrie de consigne adaptée (SGA) en direction longitudinale - radiale - des aubes dans la zone de la pale d'aube (2), c'est-à-dire pour le calcul des génératrices de la pale d'aube.
